# EUROPEAN PATENT APPLICATION

(11) **EP 2 890 145 A1**
(43) Date of publication of application: **01.07.2015**
(21) Application number: 14164311.4
(22) Date of filing: 10.04.2014
(51) Int. Cl.: H04N 21/466, H04N 21/485, H04N 21/488

(54) **Display device and method for controlling the same**

(30) Priority: 13.12.2013 KR 20130155662
(71) Applicant: LG Electronics, Inc., Seoul 150-721 (KR)
(72) Inventor: Park, Sunghee, 137-893 SEOUL (KR); Kim, Doehee, 137-893 SEOUL (KR); Park, Chala, 137-893 SEOUL (KR); Heo, Ubeom, 137-893 SEOUL (KR)
(74) Representative: Cabinet Plasseraud

(57) **Abstract**

A display device includes a receiving module configured to receive a key input signal from an external input device, a communication module configured to perform data communication with an external device, a user interface module configured to receive a command from a user, a display module configured to output content on a screen, and a controller configured to control operation of the display device. And, the controller is further configured to sense a content immersion reduction event, generate a first notification graphical user interface, GUI, including different recommended content information according to type of the content immersion reduction event, and output the first notification GUI on a screen.

## Description

This application claims the benefit of Korean Patent Application No. 10-2013-0155662, filed on December 13, 2013, which is hereby incorporated by reference as if fully set forth herein.

### BACKGROUND OF THE INVENTION

### Field of the Invention

The present invention relates to technology applicable to various display devices and, more particularly, to a display device designed to output a notification including recommended content information when a content immersion reduction event of a user for content output on the display device is sensed and a method for controlling the same.

### Discussion of the Related Art

A display device may output one or more pieces of content and broadcast programs on a screen. The display device may receive a key input signal from an external input device such as a remote controller. In addition, the display device may perform pairing with at least one external device. The display device may perform data communication with the paired external device. The display device may include a cellular phone, a smartphone, a computer, a tablet personal computer (PC), a laptop, a netbook, a television (TV), other broadcast reception devices, etc., for example.

### SUMMARY OF THE INVENTION

Accordingly, the present invention is directed to a display device and a method for controlling the same that substantially obviate one or more problems due to limitations and disadvantages of the related art.

An object of the present invention is to provide content in which a user may have more interest than content currently output on a screen, by sensing various content immersion reduction events and outputting a notification including recommended content information on a screen of a display device.

Another object of the present invention is to enable a user to receive a recommended content service even when the user uses an external device, by sensing various content immersion reduction events and transmitting notification data including recommended content information to the external device connected to a display device.

Another object of the present invention is to maximize the effect of attracting user's attention by changing the volume of a speaker when a notification is output on a screen.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a display device includes a receiving module configured to receive a key input signal from an external input device, a communication module configured to perform data communication with an external device, a user interface module configured to receive a command from a user, a display module configured to output content on a screen, and a controller configured to control operation of the display device. The controller senses a content immersion reduction event, generates a first notification graphical user interface (GUI) including different recommended content information according to type of the content immersion reduction event, and outputs the first notification GUI on a screen.

In another aspect of the present invention, a method for controlling a display device includes sensing a content immersion reduction event, generating a first notification graphical user interface (GUI) including different recommended content information according to type of the content immersion reduction event, and outputting the first notification GUI on a screen.

According to one embodiment of the present invention, it is able to to provide content in which a user may have more interest than content currently output on a screen, by sensing various content immersion reduction events and outputting a notification including recommended content information on a screen of a display device.

According to a different embodiment of the present invention, it is able to enable a user to receive a recommended content service even when the user uses an external device, by sensing various content immersion reduction events and transmitting notification data including recommended content information to the external device connected to a display device.

According to a further different embodiment of the present invention, it is able to maximize the effect of attracting user's attention by changing the volume of a speaker when a notification is output on a screen.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram showing components of a display device according to one embodiment of the present invention in detail;
FIG. 2 is a block diagram showing a controller shown in FIG. 1 in detail;
FIG. 3 is a diagram showing appearance of a remote controller according to one embodiment of the present invention;
FIG. 4 is a block diagram showing components of the remote controller shown in FIG. 3 in detail;
FIG. 5 is a block diagram showing configuration modules of a display device according to another embodiment of the present invention in detail;
FIG. 6 is a perspective view of a display device according to another embodiment of the present invention when viewed from one surface thereof;
FIG. 7 is a perspective view of a display device according to another embodiment of the present invention when viewed from the other surface thereof;
FIG. 8 is a block diagram showing configuration modules of a display device according to another embodiment of the present invention;
FIG. 9 is a diagram illustrating an example of sensing a first type of content immersion reduction event and outputting a notification on a screen at a display device according to one embodiment of the present invention;
FIG. 10 is a diagram illustrating another example of sensing a content immersion reduction event and outputting a notification on a screen at a display device according to one embodiment of the present invention;
FIG. 11 is a diagram illustrating an example of sensing a second type of content immersion reduction event and outputting a notification on a screen at a display device according to one embodiment of the present invention;
FIG. 12 is a diagram illustrating an example of providing different recommended content information according to type of a content immersion reduction event at a display device according to one embodiment of the present invention;
FIG. 13 is a diagram illustrating another example of providing different recommended content information according to type of a content immersion reduction event at a display device according to one embodiment of the present invention;
FIG. 14 is a diagram illustrating an example of transmitting data of a notification graphical user interface (GUI) to a plurality of external devices at a display device according to one embodiment of the present invention;
FIG. 15 is a diagram illustrating an example of outputting a notification GUI and controlling a volume of a speaker at a display device according to one embodiment of the present invention;
FIG. 16 is a flowchart illustrating a method of controlling a display device according to one embodiment of the present invention; and
FIGs. 17 to 20 are diagrams illustrating an example of performing a sync-up function between a display device according to one embodiment of the present invention and an external device.

### DETAILED DESCRIPTION OF THE INVENTION

Exemplary embodiments of the present invention will be described with reference to the attached drawings.

The terms "module" and "unit" used in description of components are used herein to aid in the understanding of the components and thus should not be misconstrued as having specific meanings or roles. Accordingly, the terms "module" and "unit" may be used interchangeably.

Further, the embodiments of the present invention are described with reference to the accompanying drawings and the description thereof but are not limited thereto.

Although the terms used in the present invention are selected from generally known and used terms, terms used herein may be variable depending on operator's intention or customs in the art, appearance of a new technology, or the like. In addition, some of the terms mentioned in the description of the present invention have been selected by the applicant at his or her discretion, the detailed meanings of which are described in relevant parts of the description herein. Furthermore, it is required that the present invention is understood, not simply by the actual terms used but by the meanings of each term lying within.

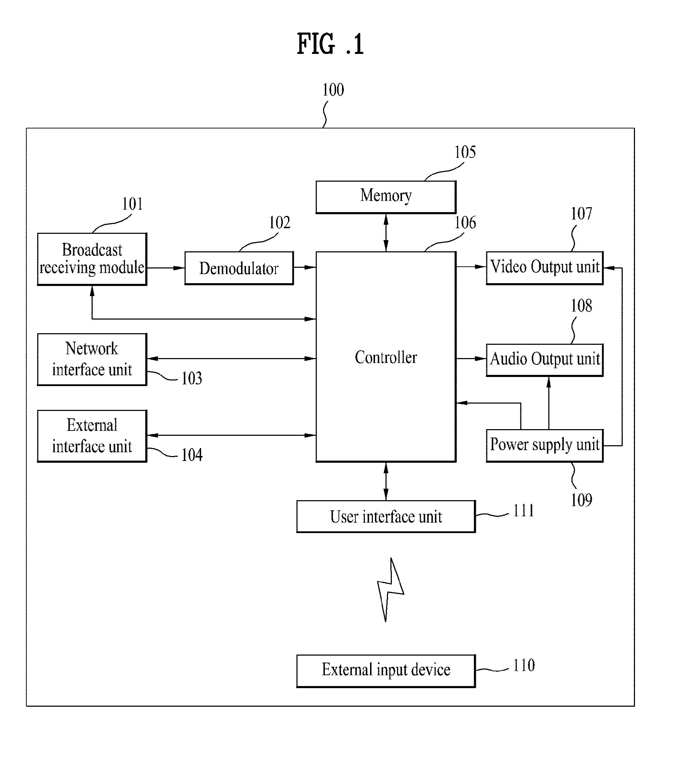

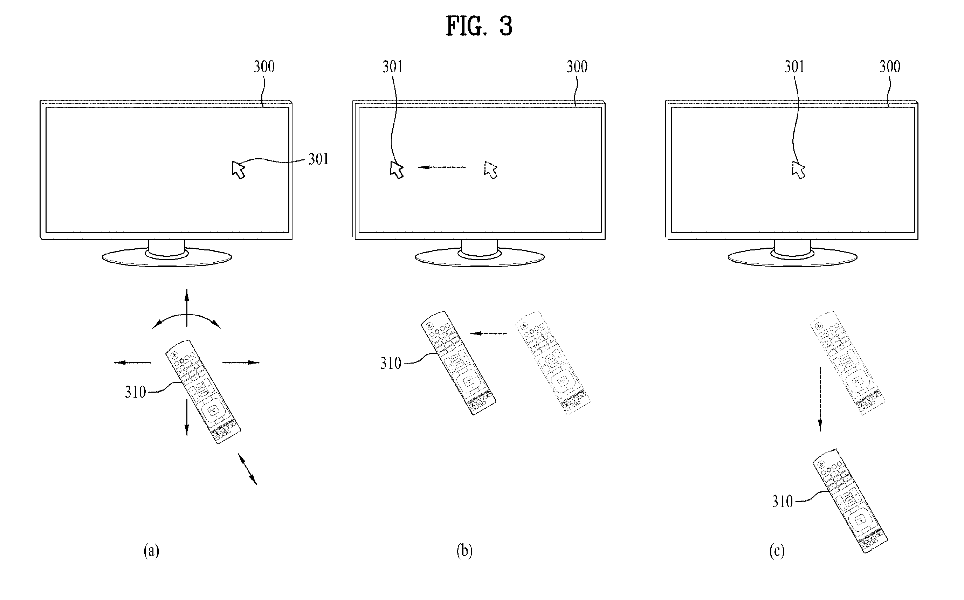

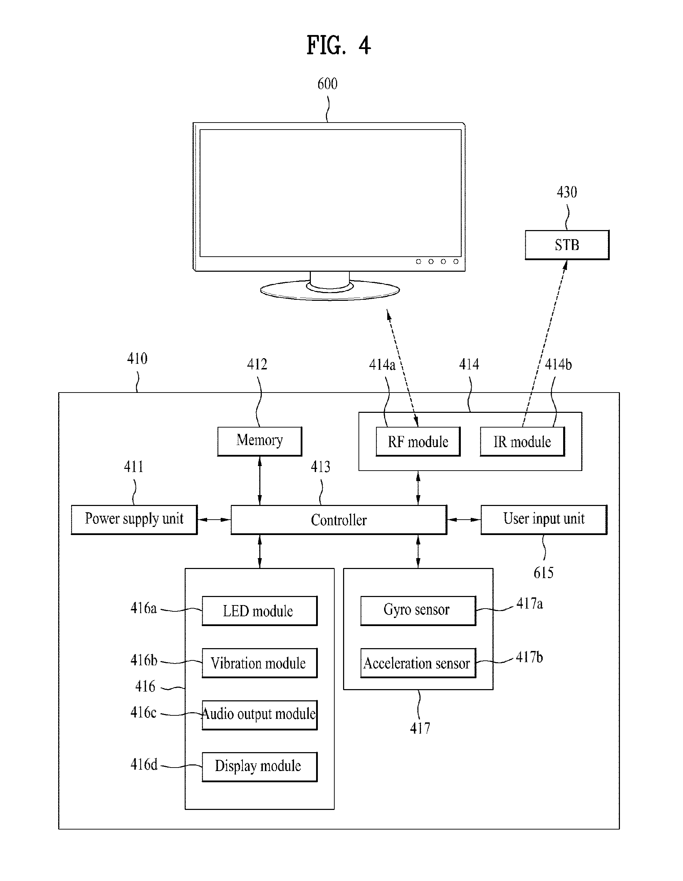

FIG. 1 is a block diagram showing components of a display device according to one embodiment of the present invention in detail. As shown in FIG. 1, the display device 100 according to one embodiment of the present invention includes a broadcast receiving module 101, a demodulator 102, a network interface 103, an external device interface 104, a memory 105, a controller 106, a video output unit 107, an audio output unit 108, a power supply unit 109, an external input device 110 and a user interface 111. The display device 100 is designed to perform data communication with a remote controller corresponding to the external input device 110. As the external input device, the remote controller will be described in greater detail below with reference to FIGs. 3 and 4.

The broadcast receiving module 101 may be designed as a radio frequency (RF) tuner or an interface for receiving broadcast data from an external device such as an STB, for example. The broadcast receiving module 101 may receive an RF broadcast signal from an Advanced Television Systems Committee (ATSC) single-carrier system or from a Digital Video Broadcasting (DVB) multi-carrier system.

The demodulator 102 receives the digital IF signal DIF from the broadcast receiving module 101 and demodulates the digital IF signal DIF. For example, if the digital IF signal output from the broadcast receiving module 101 is an ATSC signal, the demodulator 102 may perform 8-vestigal sideband (VSB) demodulation on the digital IF signal. The demodulator 102 may also perform channel decoding.

The external device interface 104 may serve as an interface for performing data communication between an external device and the display device 100. The external device interface 104 may be connected to an external device such as a digital versatile disc (DVD) player, a Blu-ray player, a game console, a camera, a camcorder, a computer (e.g., a laptop computer) or an STB, wirelessly or by wire. Then, the external device interface 104 externally receives video, audio, and/or data signals from the external device and transmits the received input signals to the controller 106. In addition, the external device interface 104 may output video, audio, and data signals processed by the controller 106 to the external device. The external device interface 104 may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-SUB port.

The network interface 103 serves as an interface for connecting the display device 100 and a wired/wireless network such as the Internet. The network interface 103 may include an Ethernet port for connection to a wired network. For connection to wireless networks, the network interface 103 may use Wireless Local Area Network (WLAN) (i.e., Wi-Fi), Wireless Broadband (WiBro), World Interoperability for Microwave Access (WiMax), and High Speed Downlink Packet Access (HSDPA). The network interface 103 may transmit data to or receive data from another user or electronic device over a connected network or another network linked to the connected network.

The memory 105 may store various programs necessary for the controller 106 to process and control signals, and may also store processed video, audio and data signals. The memory 105 may temporarily store a video, audio and/or data signal received from the external device interface 104 or the network interface 103. The memory 105 may store various OSs, middleware and platform, for example.

The user input interface 111 transmits a signal received from the user to the controller 106 or transmits a signal received from the controller 106 to an external device (e.g., the remote controller 110). For example, the user input interface 111 may receive control signals such as a power-on/off signal, a channel selection signal, and a screen setting signal from the remote controller 110 or may transmit a signal received from the controller 106 to the remote controller 110, according to various communication schemes, for example, RF communication and IR communication.

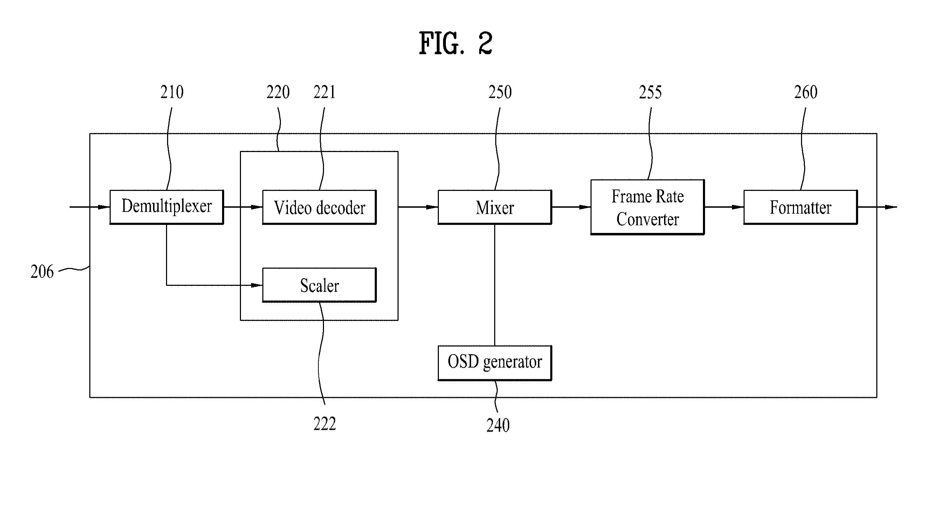

The controller 106 may demultiplex the stream signal received from the broadcast receiving module 101, the demodulator 102, the network interface 103 or the external device interface 104 into a number of signals and process the demultiplexed signals into audio and video data. The controller 106 will be described in greater detail below with reference to FIG. 2.

The video output unit 107 may convert a processed video signal, a processed data signal, and an OSD signal received from the controller 106 or a video signal and a data signal received from the external device interface 104 into RGB signals, thereby generating driving signals. The video output unit 107 may be various types of displays such as a Plasma Display Panel (PDP), a Liquid Crystal Display (LCD), an Organic Light-Emitting Diode (OLED) display, a flexible display, and a 3D display.

The audio output unit 108 may receive a processed audio signal (e.g., a stereo signal, a 3.1-channel signal or a 5.1-channel signal) from the controller 106 and output the received audio signal as sound. The audio output unit 108 may be implemented as various speakers.

The power supply 109 supplies power to the display device 100. Particularly, the power supply 109 may supply power to the controller 106, the video output unit 107, and the audio output unit 108, which may be implemented as a System On Chip (SOC).

FIG. 2 is a block diagram showing a controller shown in FIG. 1 in detail. As shown in FIG. 2, the controller 206 of the display device may include a DEMUX 210, a video processor 220, an OSD generator 240, a mixer 250, a Frame Rate Converter (FRC) 255, and a formatter 260. The controller 206 may further include an audio processor (not shown) and a data processor (not shown).

The DEMUX 210 demultiplexes an input stream. For example, the DEMUX 210 may demultiplex an MPEG-2 TS into a video signal, an audio signal, and a data signal.

The video processor 220 may process the demultiplexed video signal. For video signal processing, the video processor 220 may include a video decoder 221 and a scaler 222. The video decoder 221 decodes the demultiplexed video signal and the scaler 222 scales the resolution of the decoded video signal so that the video signal can be displayed on the video output unit. The video signal decoded by the video processor 220 is provided to the mixer 250.

The OSD generator 240 generates an OSD signal autonomously or according to user input. The mixer 250 may mix the decoded video signal processed by the image processor 220 with the OSD signal generated by the OSD generator 240. The mixed signal is provided to the formatter 260. As the decoded broadcast video signal or the external input signal is mixed with the OSD signal, an OSD may be overlaid on the broadcast image or the external input image.

The FRC 255 may change the frame rate of an input image. For example, the FRC 255 may convert a frame rate of 60 Hz into a frame rate of 120 or 240 Hz.

The formatter 260 changes the format of the signal received from the FRC 255 to be suitable for the video output unit. For example, the formatter 260 may output an RGB data signal. The RGB data signal may be output in the form of a Low Voltage Differential Signal (LVDS) or mini-LVDS.

FIG. 3 is a diagram showing appearance of a remote controller according to one embodiment of the present invention. As shown in FIG. 3(a), a pointer 301 corresponding to movement of a remote controller 310 is displayed on a screen of a display device 300. A user may move or rotate the remote controller 310 side to side (FIG. 3(b)) and up and down (Fig. 3(c)). Since the pointer 301 moves according to movement of the remote controller 310 in a 3D space, the remote controller 310 may be referred to as a pointing device. As shown in FIG. 3(b), when the user moves the remote controller 310 to the left, the pointer 301 displayed on the screen of the display device 300 also moves to the left. Meanwhile, information about movement of the remote controller 310 detected via a sensor of the remote controller 310 is transmitted to the display device 300. The display device 300 may calculate coordinates of the pointer 301 from the information about the movement of the remote controller 310. The display device 300 is designed to display the pointer 301 in correspondence with the calculated coordinates. As shown in FIG. 3(c), when the user moves the remote controller 310 downward, the pointer 301 displayed on the screen of the display device 300 also moves downward. Accordingly, a specific area of the screen of the display device 300 may be rapidly selected using the remote controller 310 according to one embodiment of the present invention.

FIG. 4 is a block diagram showing components of a remote controller shown in FIG. 3 in detail. As shown in FIG. 4, the remote controller 410 includes a wireless communication unit 414, a user input unit 415, a sensor unit 417, an output unit 416, a power supply 411, a memory 412 and a controller 413.

The wireless communication unit 414 is designed to perform communication with an arbitrary external device. In particular, according to one embodiment of the present invention, an RF module 414a is designed to perform data communication with the display device 400 and an IR module 414b is designed to perform infrared communication with an external electronic device 430 (e.g., an STB). Accordingly, the remote controller 410 may be implemented as a repeater for forwarding an IR code value received from the display device 400 to the STB 430. Further, according to one embodiment of the present invention, the remote controller 410 transmits a signal containing information about movement of the remote controller 410 to the display device 400 via the RF module 414a. In addition, the remote controller 410 may receive a signal transmitted by the display device 400 via the RF module 414a. In addition, the remote controller 410 may transmit a command for power on/off, channel change and volume change to the display device 400 via the IR module 414b as necessary.

The user input unit 415 may include a keypad, a touch pad or a touchscreen.

The sensor unit 417 may include a gyro sensor 417a and/or an acceleration sensor 417b. The gyro sensor 417a may sense movement of the remote controller 410. For example, the gyro sensor 417a may sense the movement of the remote controller 410 in X-, Y-, and Z-axis directions. The acceleration sensor 417b may sense the speed of the remote controller 410. In addition, the sensor unit 417 may further include a distance measurement sensor and may sense a distance from the display device 400 using the distance measurement sensor.

The output unit 416 may output a video and/or audio signal corresponding to manipulation of the user input unit 415 or corresponding to a signal received from the display device 400. For example, the output unit 416 may include a Light Emitting Diode (LED) module 416a which is turned on whenever the user input unit 415 is manipulated or whenever a signal is received from or transmitted to the display device 400 through the wireless communication unit 414, a vibration module 416b which generates vibrations, an audio output module 416c which outputs audio data, and/or a display module 416d which outputs video data.

The power supply 411 supplies power to the components of the remote controller 410. If the remote controller 410 is kept stationary for a predetermined time or longer, the power supply 411 may, for example, shut off supply of power to the remote controller 410 in order to save energy.

The memory 412 may store various types of programs and application data necessary to control or drive the remote controller 410. The controller 413 provides overall control to the remote controller 410. The controller 413 may transmit a signal corresponding to a key manipulation detected from the user input unit 415 or a signal corresponding to the motion of the remote controller 410, as sensed by the sensor unit 417, to the display device 400 or the STB 430 via the wireless communication unit 414.

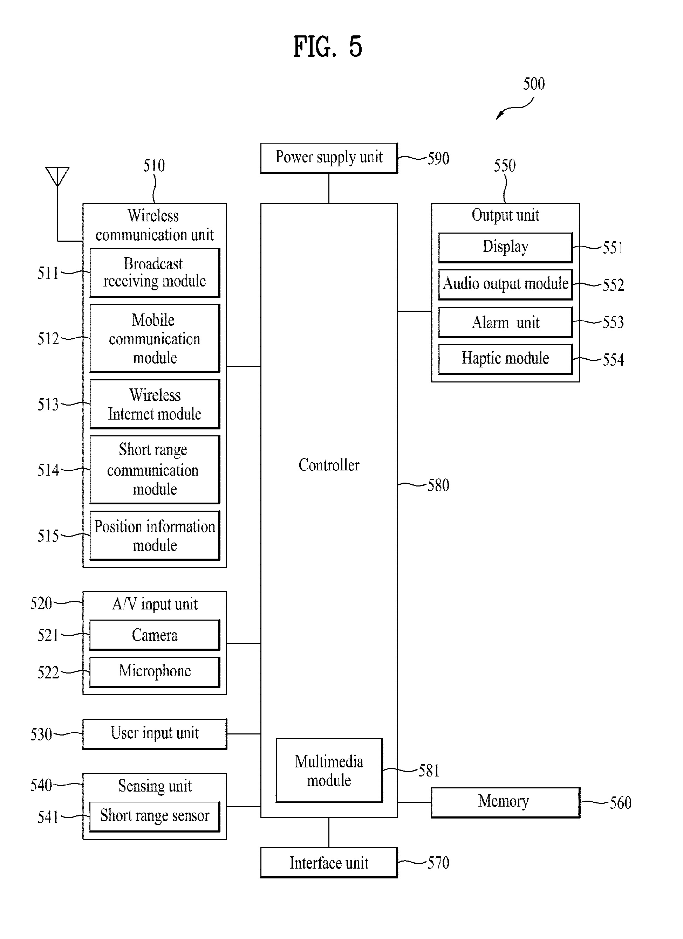

FIG. 5 is a block diagram showing configuration modules of a display device according to another embodiment of the present invention in detail. The display device 500 according to another embodiment of the present invention may include a wireless communication system 510, an audio/video (AN) input unit 520, a user input unit 530, a sensing unit 540, an output unit 550, a memory560, an interface 570, a controller 580 and a power supply 590. The display device 500 having more components or less components may be implemented.

The wireless communication unit 510 may include one or more modules for performing wireless communication between the display device 500 and a wireless communication system or between the display device 500 and a network in which another display device is located. For example, the wireless communication unit 510 may include a broadcast receiving module 511, a mobile communication module 512, a wireless Internet module 513, a short range communication module 514, a position information module 515, etc.

The broadcast receiving module 511 receives at least one of a broadcast signal and broadcast-related information from an external broadcast management server through a broadcast channel. The broadcast channel may include a satellite channel and a terrestrial channel. The broadcast management server may refer to a server for generating and transmitting at least one of a broadcast signal and broadcast-related information or a server for receiving and transmitting at least one of a previously generated broadcast signal and broadcast-related information to a device. The broadcast signal may include not only a TV broadcast signal, a radio broadcast signal and a data broadcast signal but also a broadcast signal obtained by combining a TV broadcast signal or a radio broadcast signal with a data broadcast signal. The broadcast-related information may refer to information related to a broadcast channel, a broadcast program or a broadcast service provider. The broadcast-related information may be provided via a mobile communication network and, in this case, may be received by the mobile communication module 512. The broadcast-related information may have various formats, for example, electronic program guide (EPG) of digital multimedia broadcasting (DMB) or electronic service guide (ESG) of digital video broadcast-handheld (DVB-H). The broadcast receiving module 511 may receive a digital broadcast signal using a digital broadcast system such as digital multimedia broadcasting-terrestrial (DMB-T), digital multimedia broadcasting-satellite (DMB-S), Media Forward Link Only (MediaFLO), digital video broadcast-handheld (DVB-H) or integrated services digital broadcast-terrestrial (ISDB-T). The broadcast receiving module 511 may be configured to suit not only a digital broadcast system but also all broadcast systems for providing broadcast signals. The broadcast signal and/or the broadcasted-related information received through the broadcast receiving module 511 may be stored in the memory 560.

The mobile communication module 512 transmits or receives a wireless signal to or from at least one of a base station, an external terminal and a server over a mobile communication network. The wireless signal may include a voice call signal, a video call signal or various types of data associated with transmission and reception of a text/multimedia message.

The wireless Internet module 513 is an internal or external module for wireless Internet access which may be provided to the display device 500. As wireless Internet technologies, Wireless LAN (WLAN)(Wi-Fi), Wireless broadband (WiBro), World Interoperability for Microwave Access (WiMax) or High Speed Downlink Packet Access (HSDPA), etc. may be used.

The short range communication module 514 may perform short range communication. As short range communication technologies, Bluetooth, Radio Frequency Identification (RFID), Infrared Data Association (IrDA), Ultra Wideband (UWB), ZigBee, etc. may be used.

The position information module 515 may acquire the position of the display device 500 and a representative example thereof includes a global positioning system (GPS) module.

Referring to FIG. 5, the A/V input unit 520 receives an audio signal or a video signal and may include a camera 521 and a microphone 522. The camera 521 processes a video frame of a still image or a moving image obtained by an image sensor in a video call mode or a photographing mode. The processed video frame may be displayed on the display 551.

The video frame processed by the camera 521 may be stored in the memory 560 or externally transmitted through the wireless communication unit 510. The number of cameras 521 may be two or more according to the configuration of the terminal.

The microphone 522 receives an external audio signal in a call mode, a recording mode or a voice recognition mode and converts the external audio signal into electrical audio data. The processed audio data may be converted into a format transmittable to a mobile communication base station through the mobile communication module 512 to be output in a call mode. The microphone 522 may use various noise elimination algorithms for eliminating noise generated in a process of receiving the external audio signal.

The user input unit 530 generates input data enabling the user to control the operation of the display device 500. The user input unit 530 may include a keypad, a dome switch, a touchpad (static pressure/static electrical), a jog wheel, a jog switch, etc.

The sensing unit 540 detects a current state of the display device 500 such as whether the display device 500 is opened or closed, contact/non-contact of a user, the position of the display device 500 and acceleration/deceleration of the display device 500 and generates a sensing signal for controlling the operation of the display device 500. For example, if the display device 500 is a slide phone, the sensing unit 540 may sense whether the slide phone is opened or closed. The sensing unit 540 may sense whether or not the power supply 590 supplies power or whether or not an external device is connected through the interface 570. The sensing unit 540 may include a proximity sensor 541.

The output unit 550 outputs an audio signal, a video signal or a tactile signal. The output unit 550 may include a display 551, an audio output module 552, an alarm unit 553 and a haptic module 554.

The display 551 displays (outputs) information processed by the display device. For example, if the display device 500 is in a call mode, the display displays a user interface (UI) or a graphical user interface (GUI). If the display device 500 is in a video call mode or a photographing mode, the display may individually or simultaneously display the photographed or received images and display a UI and a GUI. The display 551 may include at least one of a liquid crystal display (LCD), a thin film transistor-liquid crystal display (TFT LCD), an organic light emitting diode (OLED), a flexible display and a 3-dimensional (3D) display. Some of these displays may be of a transparent type or light transmission type, which is referred to as a transparent display. A representative example of the transparent display includes a transparent OLED (TOLED). The rear structure of the display 551 may be a light transmission structure. By such a structure, a user can view an object located behind the device body via an area occupied by the display 551 of the device body.

The number of displays 551 may be two or more according to implementations of the display device 500. For example, a plurality of displays may be separately or integrally provided on one surface of the display device 500 or may be respectively provided on different surfaces of the display device 500.

If the display 551 and a sensor for sensing touches (hereinafter, referred to as a touch sensor) have a layered structure (hereinafter, referred to as a touchscreen), the display 551 can be used not only as an output device but also as an input device. The touch sensor may take the form of, for example, a touch film, a touch sheet, a touch pad, etc.

The touch sensor may convert variation in pressure applied at or in capacitance generated from a specific position of the display 551 into an electrical input signal. The touch sensor may detect a touched pressure as well as a touched position and area. Upon sensing touch input, a touch signal corresponding to the touch input is sent to a touch controller. The touch controller processes the touch signal and provides data corresponding to the processed signal to the controller 580. Thus, the controller 580 identifies a touched area of the display 551. Referring to FIG. 5, a proximity sensor 541 may be provided inside the display device 500 surrounded by the touchscreen or near the touchscreen. The proximity sensor refers to a sensor for detecting an object approaching a predetermined detection surface or presence of a nearby object using electromagnetic force or infrared light without mechanical contact. The proximity sensor has a lifespan longer than and availability higher than a contact sensor. Examples of the proximity sensor include a transmission type photoelectric sensor, a direct reflection type photoelectric sensor, a mirror reflection type photoelectric sensor, a high-frequency oscillation type proximity sensor, a capacitive proximity sensor, a magnetic proximity sensor, an infrared proximity sensor, etc. When the touch sensor is of a capacitive type, proximity of the pointer is detected by variation in electric field according to proximity of the pointer. In this case, the touchscreen (touch sensor) may correspond to a proximity sensor.

The audio output module 552 may output audio data received from the wireless communication module 510 or stored in the memory 560 in a call mode, a recording mode, a voice recognition mode or a broadcast reception mode. The audio output module 552 outputs an audio signal associated with the functions performed by the display device 500 (e.g., message reception sound). The audio output module 552 may include a speaker, a buzzer, etc.

The alarm unit 553 outputs a signal notifying the user that an event has occurred in the display device 500. Examples of the event which has occurred in the display device 500 include message reception, key signal input, touch input, etc. The alarm unit 553 outputs a signal notifying the user of the occurrence of an event in the other form in addition to an audio or video signal. For example, the alarm unit may output the signal in the form of vibrations. Since the video signal or the audio signal may be output via the display 551 or the audio output module 552, the display 551 and the audio output module 552 may correspond to the alarm unit 553.

The haptic module 554 generates a variety of tactile effects that the user can feel. A typical example of the tactile effect generated by the haptic module 554 is vibration. The intensity and pattern of the vibrations generated by the haptic module 554 may be controlled. For example, different vibrations may be combined and output or may be sequentially output.

The haptic module 554 may generate a variety of tactile effects such as an effect due to stimulus through arrangement of pins which vertically move with respect to a contact skin surface, an effect due to stimulus through air ejection force or absorption force through an ejection hole and an absorption hole, an effect due to stimulus through contact of an electrode, an effect due to stimulus using electrostatic force, or an effect due to cold and warmth using a heat absorption or heating element. The haptic module 554 may deliver the tactile effect through direct contact or enable the user to feel the tactile effect through kinaesthesia of a finger or arm of the user. The number of haptic modules 554 may be two or more according to the configuration of the display device 500.

The memory 560 may store a program for processing and control of the controller 580 and may temporarily store input or output data (for example, messages, still images, and moving images). The memory 560 may store data regarding vibrations and sound having various patterns output upon touch input of the touchscreen. The memory 560 may include at least one of a flash memory type, hard disk type, multimedia card micro type or card type memory (e.g., an SD or XD memory, etc.), a random access memory (RAM), a static random access memory (SRAM), a read only memory (ROM), an electrically erasable programmable read only memory (EEPROM), a programmable read only memory (PROM), a magnetic memory, a magnetic disk, an optical disc, etc. The display device 500 may manage a web storage for performing a storage function of the memory 560 over the Internet.

The interface 570 serves as an interface with all external devices connected to the display device 500. The interface 570 may receive data or power from an external device or transmit the components of the display device 500 or transmit data from the display device 500 to the external device. Examples of the interface 570 may include a wired/wireless headset port, an external charger port, a wired/wireless data port, a memory card port, a port for connecting a device including an identity module, an audio input/output (I/O) port, a video I/O port and an earphone port.

The identity module is a chip for storing a variety of information for authenticating authority for use of the display device 500 and may include a user identity modulation (UIM), a subscriber identity module (SIM), a universal subscriber identity module (USIM), etc. The device (hereinafter, referred to as an identity device) including the identity module may be manufactured in the form of a smart card. Accordingly, the identity device may be connected to the display device 500 via a port.

The interface 570 may become a passage through which power is supplied from an external cradle to the display device 500 when the display device is connected to the external cradle or a passage through which a variety of command signals received from the cradle by the user is delivered to the display device 500. A variety of command signals or power received from the cradle may serve as a signal for determining whether the display device 500 is accurately mounted in the cradle.

The controller 580 controls the operations of the units and controls the overall operation of the display device 500. For example, the controller performs control and processing associated with a voice call, data communication, a video call, etc. The controller 580 may include a multimedia reproduction module 581 for multimedia reproduction. The multimedia reproduction module 581 may be implemented in or separately from the controller 580. The controller 580 may perform a pattern recognition process for recognizing handwriting input or drawing input performed on the touchscreen as text or images.

The power supply 590 receives external power or internal power and supplies power required for operation to each component under control of the controller 180. Various embodiments described herein may be implemented in a recording medium read by a computer or a similar device using software, hardware or a combination thereof.

In the case of implementing the present invention by hardware, the present invention can be implemented with application specific integrated circuits (ASICs), Digital signal processors (DSPs), digital signal processing devices (DSPDs), programmable logic devices (PLDs), field programmable gate arrays (FPGAs), processors, controllers, microcontrollers, microprocessors, an electric unit for other functions, etc. In some cases, the embodiments described in the present specification may be implemented by the controller 580.

If operations or functions of the present invention are implemented by software, the procedures or functions described in the present invention can be implemented by separate software modules. The software modules may perform one or more functions and operations described in the present specification. Software code may be implemented by a software application written by an appropriate program language. The software code may be stored in the memory 560 so that it can be driven by the controller 580.

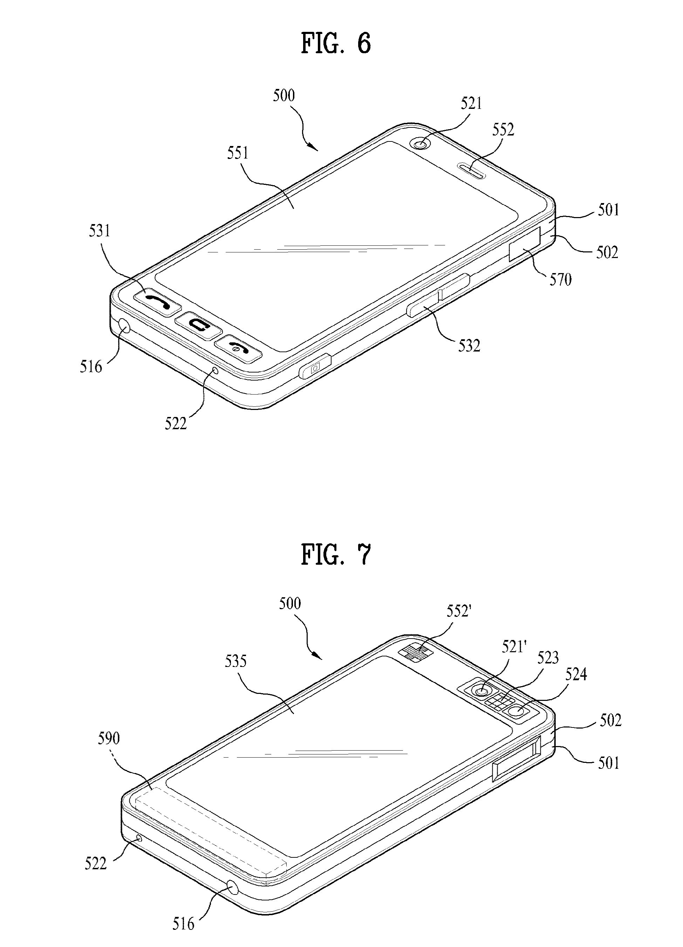

FIG. 6 is a perspective view of a display device according to another embodiment of the present invention when viewed from one surface thereof. The display device 500 shown in FIG. 6 includes a device body having a bar shape. The present invention is not limited thereto and various structures such as a slide type, a folder type, a swing type, a swivel type, etc., in which two more bodies are movably coupled. The body includes a case (casing, housing, cover, etc.) forming appearance of the display device. In the present embodiment, the case may be divided into a front case 501 and a rear case 502. Various electronic parts are mounted in a space formed between the front case 501 and the rear case 502. At least one intermediate case may be further provided between the front case 501 and the rear case 502. The cases may be formed by injecting synthetic resin or may be made of metal such as stainless steel (STS) or titanium (Ti). In the device body and, more particularly, the front case 501, the display 551, the audio output module 552, the camera 521, the user input units 530/531 and 532, the microphone 522 and the interface 570 may be provided.

The display 551 occupies most of a main surface of the front case 501. The audio output module 551 and the camera 521 are provided in an area adjacent to one end of the display 551 and the user input unit 531 and the microphone 522 are provided in an area adjacent to the other end of the display 551. The user input unit 532 and the interface 570 may be provided on side surfaces of the front case 501 and the rear case 502.

The user input unit 530 is manipulated to receive a command for controlling operation of the display device 500 and may include a plurality of manipulation units 531 and 532. The manipulation units 531 and 532 may be collectively referred to as a manipulation portion and any method for enabling a user to feel tactile effects may be employed.

Information input by the first or second manipulation unit 531 or 532 may be variously set. For example, the first manipulation unit 531 may receive a command such as start, end, scroll, etc. and the second manipulation unit 532 may receive a command for controlling the volume output from the audio output module 552 or switching to a touch recognition mode of the display 551.

FIG. 7 is a perspective view of a display device according to another embodiment of the present invention when viewed from the other surface thereof. As shown in FIG. 7, a camera 521' may be further mounted on the rear surface of the body of the display device 500, that is, the rear case 502. The camera 521' may have a photographing direction opposed to that of the camera 521 (see FIG. 6) and may have the number of pixels different from that of the camera 521. For example, the number of pixels of the camera 521 may be small because the camera 521 is mainly used to capture and transmit a user's face to the other party in case of a video call and the number of pixels of the camera 521' may be large because the camera 512' is mainly used to capture a general subject and is not immediately transmitted. The cameras 521 and 521' may be mounted rotatably or retractably. A flash 523 and a mirror 524 may be further provided near the camera 521'. The flash 523 flashes light toward a subject when capturing the subject. The mirror 524 enables the user to view the user's face when the user captures (self-captures) the user's face using the camera 521'.

An audio output unit 552' may be further provided on the rear surface of the device body. The audio output unit 552' may implement a stereo function together with the audio output module 552 and may be used to implement a speakerphone mode upon a phone call.

In addition to an antenna for a telephone call, a broadcast signal reception antenna 516 may be further provided on the side surface of the device body. The antenna 516 forming a part of the broadcast receiving module 511 may be retractably mounted in the device body.

A power supply 590 for supplying power to the display device 500 is mounted in the device body. The power supply 590 may be detachably mounted inside or outside the device body.

A touch pad 535 for sensing touch may be further mounted in the rear case 502. The touch pad 535 may be of a light transmission type similarly to the display 551. In this case, when the display 551 is configured to output visual information on both surfaces of the display 551, the visual information may be perceived through the touch pad 535. The information output on both surfaces of the display may be controlled by the touch pad 535. A display may be further mounted in the touch pad 535 and thus a touchscreen may also be mounted on the rear case 502.

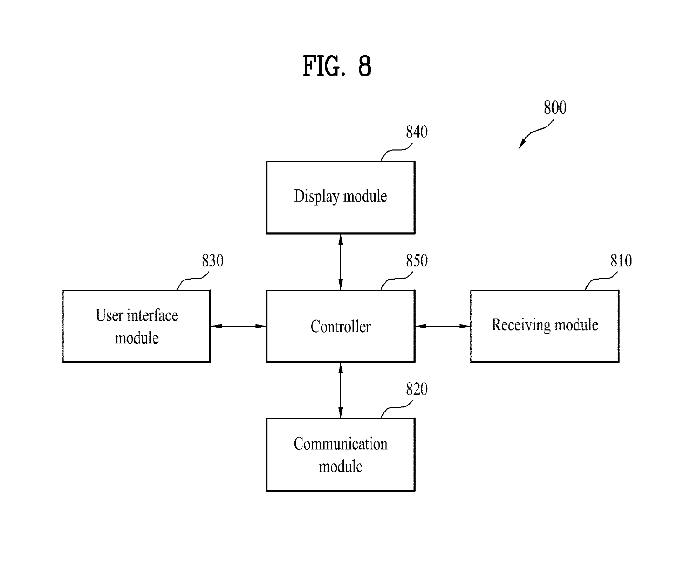

FIG. 8 is a block diagram showing configuration modules of a display device according to another embodiment of the present invention. Some of the modules of the display device of FIG. 8 may be changed or new modules may be added with reference to FIGs. 1 to 7. The scope of the present invention is not determined by the elements described with reference to FIGs. 1 to 8 but is determined by the claims. As shown in FIG. 8, the display device 800 includes a receiving module 810, a communication module 820, a user interface module 830, a display module 840 and a controller 850.

The receiving module 810 may receive a key input signal from an external input device. The external input device may be the remote controller described with reference to FIGs. 3 to 4. The key input signal may be received using various communication methods such as a radio frequency (RF) communication method, an infrared (IR) communication method, etc. The key input signal may be a control signal such as power on/off, channel selection, screen settings, etc. The receiving module 810 may correspond to the user interface 111 described with reference to FIG. 1.

The communication module 820 may perform data communication with an external device. Data communication may be performed using a wired/wireless network. The communication module 820 may correspond to the network interface 103 described with reference to FIG. 1.

The user interface module 830 may receive a command from the user. The user interface module 830 may send the command received from the user to the controller 850. The user interface module 830 may generate a GUI for receiving the command from the user and the controller 850 may control output of the generated GUI on the screen.

The display module 840 may output one or more pieces of content or broadcast programs. The display module 840 may output the GUI generated by the user interface module 830 on the screen. The display module 840 may correspond to the display 551 described with reference to FIG. 5.

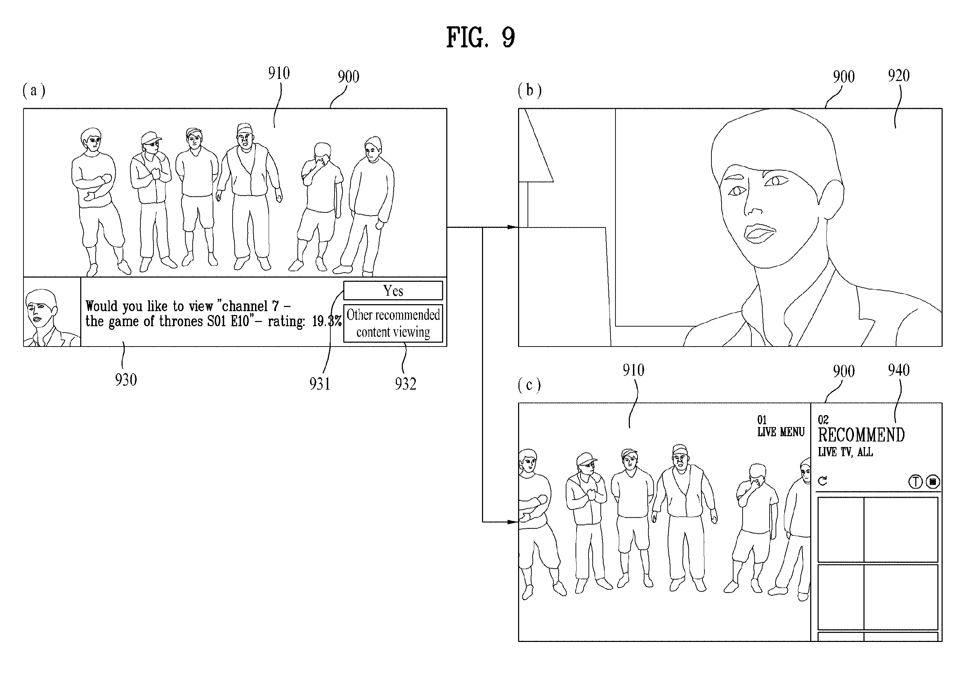

The controller 850 serves to manage the function of one or more of the modules shown in FIG. 8, such as the receiving module 810, the communication module 820, the user interface module 830 and the display module 840, which will be described in greater detail with reference to FIGs. 9 to 20.

FIG. 9 is a diagram illustrating an example of sensing a first type of content immersion reduction event and outputting a notification on a screen at a display device according to one embodiment of the present invention.

The controller of the display device 900 according to one embodiment of the present invention may sense a content immersion reduction event, generate a first notification GUI 930 including other recommended content information according to type of the content immersion reduction event and output the first notification GUI 930 on the screen. The type of the content immersion reduction event may include a first type based on key input signal information received from the external input device connected to the display device 900 and a second type based on an event occurring in the external device connected to the display device 900.

The content immersion reduction event may include an event for changing a channel by a predetermined number or more. The predetermined number may be set to 5 by default.

The content immersion reduction event may include an event for receiving the same key input signal from the external input device during a predetermined time or more. The predetermined time may be set to 3 seconds by default.

The content immersion reduction event may include an event for searching multimedia content of the same format during a predetermined time or more without selecting specific multimedia content. The predetermined time may be set to 10 seconds by default.

The content immersion reduction event may include an event for searching for an application within the same market during a predetermined time or more without downloading a specific application. The predetermined time may be set to 20 seconds by default.

The content immersion reduction event may include an event for providing advertisements via all public TV channels.

As shown in FIG. 9(a), when the display device 900 outputs content 910 received from a first channel on the screen and senses a content immersion reduction event, the first notification GUI 930 including different recommended content information on the screen according to type of the content immersion reduction event. The first notification GUI 930 may include recommended content information, an icon 931 for requesting output of recommended content and an icon for requesting output of other recommended content information.

As shown in FIG. 9(b), when a signal for selecting the icon 931 for requesting output of the recommended content in the first notification GUI 930 is received from the user via the external input device, the controller of the display device 900 may output the recommended content on the screen based on the recommended content information included in the first notification GUI 930.

As shown in FIG. 9(c), when a signal for selecting the icon 932 for requesting output of the other recommended content information in the first notification GUI 930 is received from the user via the external input device, the controller of the display device 900 may output, on the screen, a recommended content page 940 including the other recommended content information other than the recommended content information included in the first notification GUI 930. The recommended content page 940 including the other recommended content information may be generated together with data of the first notification GUI 930. That is, the recommended content page 940 including the other recommended content information may also be generated when the content immersion reduction event is reduced. The recommended content information included in the recommended content page 940 including the other recommended content information may be generated using the same method as the method of determining the recommended content included in the first notification GUI 930. For example, when the recommended content included in the first notification GUI 930 is a program having a highest rating among the programs which are being broadcast via the public TV channels, the recommended content information included in the recommended content page 940 including the other recommended content information may be information about a program having a second higher rating among the programs which are being broadcast via public TV channels.

By such design, it is possible to rapidly cope with reaction of the user who is less interested in the content output from the display device and to eliminate an inconvenient process of enabling the user to search for other content.

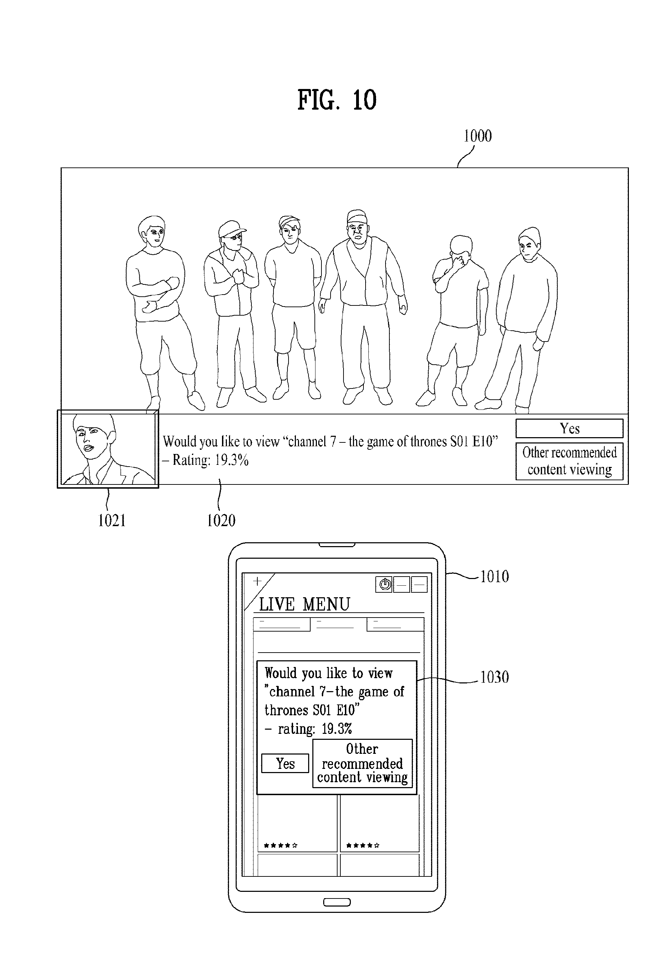

FIG. 10 is a diagram illustrating another example of sensing a content immersion reduction event and outputting a notification on a screen at a display device according to one embodiment of the present invention.

The controller of the display device 1000 according to one embodiment of the present invention may detect the screen size of the external device 1010 connected to the display device 1000, generate a second notification GUI 1030 for changing the design of the first notification GUI 1020 in correspondence with the detected screen size of the external device 1010 and transmit data of the second notification GUI 1030 to the external device 1010. The display device 1000 according to one embodiment of the present invention may be connected to the external device 1010 via a wired/wireless network. The external device 1010 may include a TV including a display, a smartphone, a tablet PC, a laptop, etc. For example, when the screen size of the external device 1010 connected to the display device 1000 is less than that of the display device 1000, the second notification GUI 1030 may be generated by deleting a thumbnail 1021 included in the first notification GUI 1020 and reducing the size of the GUI. That is, the controller of the display device 1000 may change the design such as the structure and size of the first notification GUI 1020 according to the screen size of the external device 1010 and generate the second notification GUI 1030 suitable for the screen size of the external device 1010. The second notification GUI 1030 may be output on the external device 1010 and the first notification GUI 1020 and the second notification GUI 1030 may include the same recommended content information, and the first notification GUI 1020 and the second notification GUI 1030 may be simultaneously output on the display device 1000 and the external device 1010. When a signal for selecting the icon for requesting output of the other recommended content information in the first notification GUI 1020 is received from the user via the external input device, the controller of the display device may output the recommended content page including the other recommended content information other than the recommended content information included in the first notification GUI 1020 on the screen. At this time, when the user selects the icon for requesting output of the other recommended content information via the second notification GUI 1030 output on the external device 1010, the recommended content page having the same data as the recommended content page output via the first notification GUI 1020 may be output on the external device 1010. That is, the icon for requesting output of the other recommended content information in the first notification GUI 1020 and the icon for requesting output of the other recommended content information in the second notification GUI 1030 may be linked to the same data or server. Accordingly, by design of FIG. 10, the user can rapidly receive the recommended content service via the external device 1010 as well as via the display device 1000.

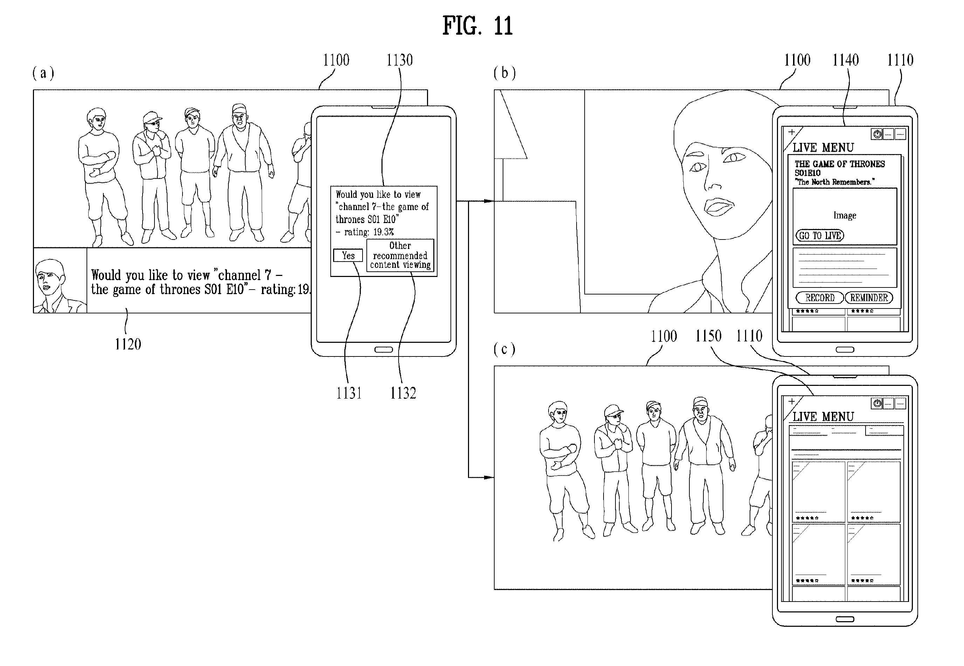

FIG. 11 is a diagram illustrating an example of sensing a second type of content immersion reduction event and outputting a notification on a screen at a display device according to one embodiment of the present invention.

The controller of the display device 1100 according to one embodiment of the present invention may sense a content immersion reduction event, generate a first notification GUI 1120 including different recommended content information according to type of the content immersion reduction event and output the first notification GUI 1120 on the screen. The type of the content immersion reduction event may include a first type based on key input signal information received from the external input device connected to the display device 1100 and a second type based on an event occurring in the external device 1110 connected to the display device 1100.

The content immersion reduction event may include an event for sensing a signal for controlling the external device 1110 during a predetermined time or more. The predetermined time may be set to 30 seconds by default.

The content immersion reduction event may include an event for sensing a signal for reproducing a predetermined number or more of pieces of content on the external device 1110. The predetermined number may be set to 3 by default.

As shown in FIG. 11(a), when the display device 1100 outputs content received from a first channel on the screen and senses a content immersion reduction event, the first notification GUI 1120 including different recommended content information may be output on the screen according to type of the content immersion reduction event. The controller of the display device 100 may generate the second notification GUI 1130 obtained by changing the design of the first notification GUI 1120 according to the screen size of the external device 1110 connected to the display device 1100. The first notification GUI 1120 may be output on the display device 1100 and the second notification GUI 1130 may be output on the external device 1110.

As shown in FIG. 11(b), when a signal for selecting the icon 1131 for requesting output of the recommended content in the second notification GUI 1130 is received from the user via the external device 1110, the controller of the display device 1100 may output the recommended content on the screen based on the recommended content information included in the second notification GUI 1130. The controller of the display device 1100 may transmit a signal for outputting a detailed content-information page 1140 including synopsis information of the recommended content on the screen to the external device 1110. The external device 1110, which receives the signal, may output the detailed content-information page 1140 including the synopsis information of the recommended content on the screen.

As shown in FIG. 11(c), when a signal for selecting the icon 1132 for requesting output of the other recommended content information in the second notification GUI 1130 is received from the user via the external device 1110, the controller of the display device 1100 may transmit, to the external device 1110, a signal for outputting a recommended content page 1150 including the other recommended content information other than the recommended content information included in the second notification GUI 1130 on the screen. The display device 1100 may output the content on the screen without change.

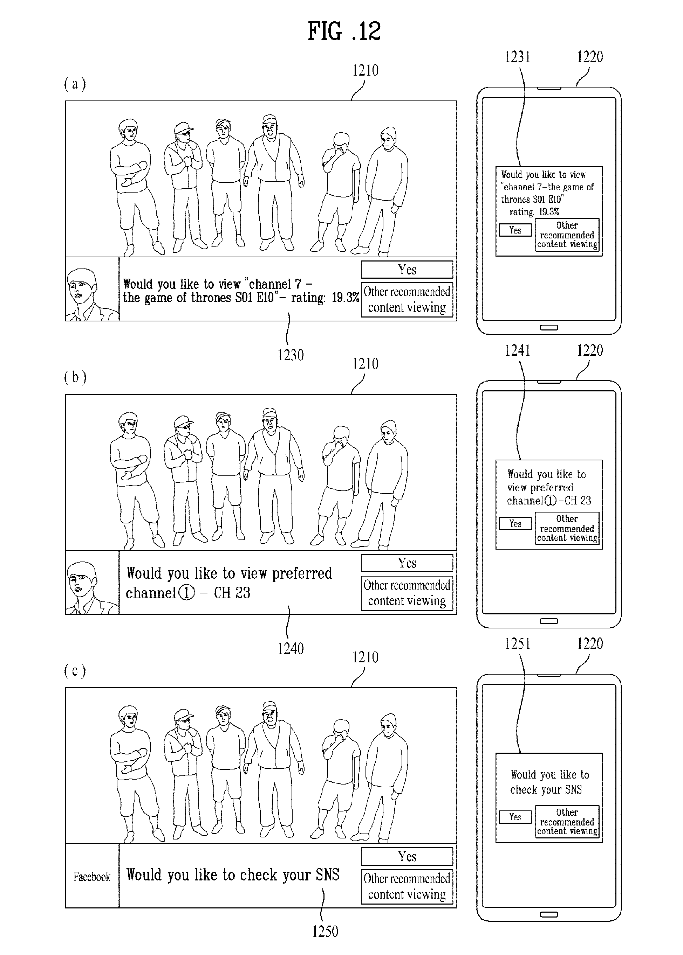

FIG. 12 is a diagram illustrating an example of providing different recommended content information according to type of a content immersion reduction event at a display device according to one embodiment of the present invention.

The controller of the display device 1210 according to one embodiment of the present invention may sense a content immersion reduction event, generate first notification GUIs 1230, 1240 and 1250 including different recommended content information according to type of the content immersion reduction event and output the first notification GUIs 1230, 1240 and 1250 on the screen. The type of the content immersion reduction event may include a first type based on key input signal information received from the external input device connected to the display device and a second type based on an event occurring in the external device 1220 connected to the display device 1210.

If the type of the content immersion reduction event is a first type, the recommended content information included in the first notification GUI 1230 may be channel information of a program currently having the highest raging.

If the type of the content immersion reduction event is a first type, the recommended content information included in the first notification GUI 1240 may be program information which is being broadcast via a predetermined preferred channel.

If the type of the content immersion reduction event is a first type, the recommended content information included in the first notification GUI 1250 may be social networking service (SNS) information.

The controller of the display device 1210 may generate the second notification GUIs 1231, 1241 and 1251 obtained by changing the design of the first notification GUIs 1230, 1240 and 1250 according to the screen size of the external device 1220 connected to the display device 1210. The first notification GUIs 1230, 1240 and 1250 may be output on the display device 1210 and the second notification GUIs 1231, 1241 and 1251 may be output on the external device 1220. The process of generating and outputting the first notification GUIs 1230, 1240 and 1250 and the second notification GUIs 1231, 1241 and 1251 on the respective devices have been described above.

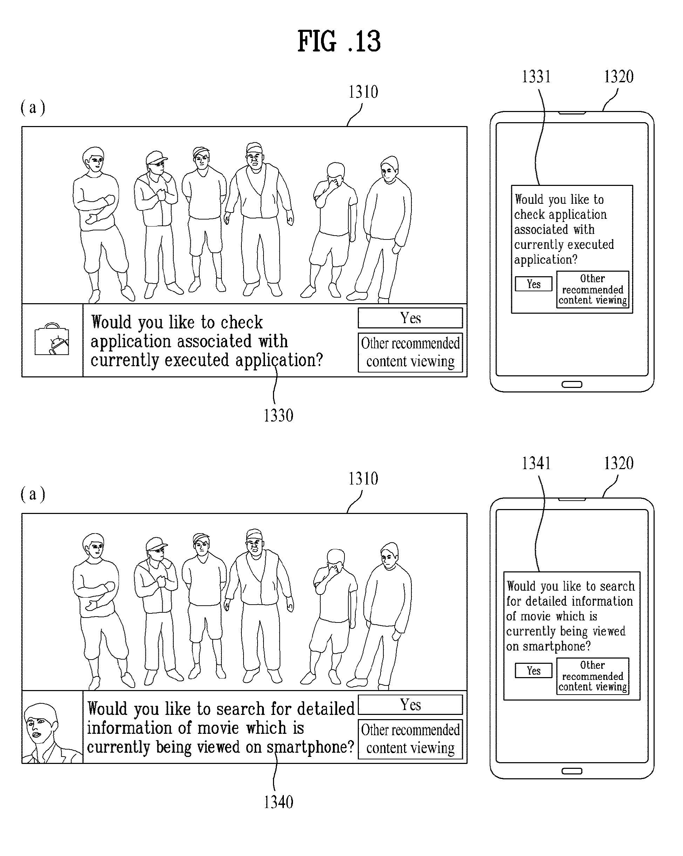

FIG. 13 is a diagram illustrating another example of providing different recommended content information according to type of a content immersion reduction event at a display device according to one embodiment of the present invention.

The controller of the display device 1310 according to one embodiment of the present invention may sense a content immersion reduction event, generate first notification GUIs 1330 and 1340 including different recommended content information according to type of the content immersion reduction event and output the first notification GUIs 1330 and 1340 on the screen. The type of the content immersion reduction event may include a first type based on key input signal information received from the external input device connected to the display device and a second type based on an event occurring in the external device 1320 connected to the display device 1310.

If the type of the content immersion reduction event is a second type, the recommended content information included in the first notification GUI 1330 may be content information related to content output on the external device 1320.

If the type of the content immersion reduction event is a second type, the recommended content information included in the first notification GUI 1340 may be detailed information of content which is being output on the external device 1320.

The controller of the display device 1310 may generate the second notification GUIs 1331 and 1341 obtained by changing the design of the first notification GUIs 1330 and 1340 according to the screen size of the external device 1320 connected to the display device 1310. The first notification GUIs 1330 and 1340 may be output on the display device 1310 and the second notification GUIs 1331 and 1340 may be output on the external device 1320. The process of generating and outputting the first notification GUIs 1330 and 1340 and the second notification GUIs 1331 and 1341 on the respective devices have been described above.

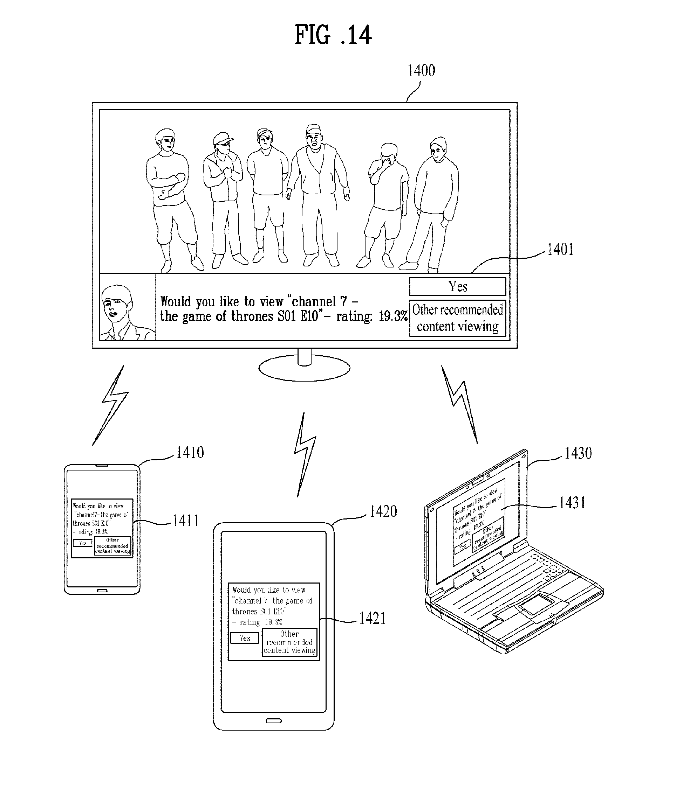

FIG. 14 is a diagram illustrating an example of transmitting data of a notification graphical user interface (GUI) to a plurality of external devices at a display device according to one embodiment of the present invention.

As shown in FIG. 14, the controller of the display device 1400 according to one embodiment of the present invention may simultaneously perform data communication with a plurality of external devices 1410, 1420 and 1430 using various communication protocols such as Bluetooth or Wi-Fi Direct. The controller of the display device 1400 may sense a content immersion reduction event, detect recommended content information based on the content immersion reduction event and generate and output a first notification GUI 1401 including the detected recommended content information on the screen. Further, the controller of the display device 1400 may detect the screen sizes of the plurality of eternal devices 1410, 1420 and 1430 connected to the display device 1400, change some or all of the design of the first notification GUI 1401 and generate a notification GUI optimized for each device. For example, when the screen sizes of the first external device 1410, the second external device 1420 and the third external device 1430 are different, the controller of the display device 1400 may change the design of the first notification GUI 1401 according to the screen sizes of the external devices and generate a second notification GUI 1411, a third notification GUI 1421 and a fourth notification GUI 1431. Further, the controller of the display device 1400 may transmit data of the second notification GUI 1411 to the first external device 1410, transmit data of the third notification GUI 1421 to the second external device 1420 and transmit data of the fourth notification GUI 1431 to the third external device 1430. The recommended content information included in the first notification GUI 1401, the second notification GUI 1411, the third notification GUI 1421 and the fourth notification GUI 1431 may be information about the same content. By such design, the user can rapidly receive the recommended content service even when a specific device among the plurality of external devices is used.

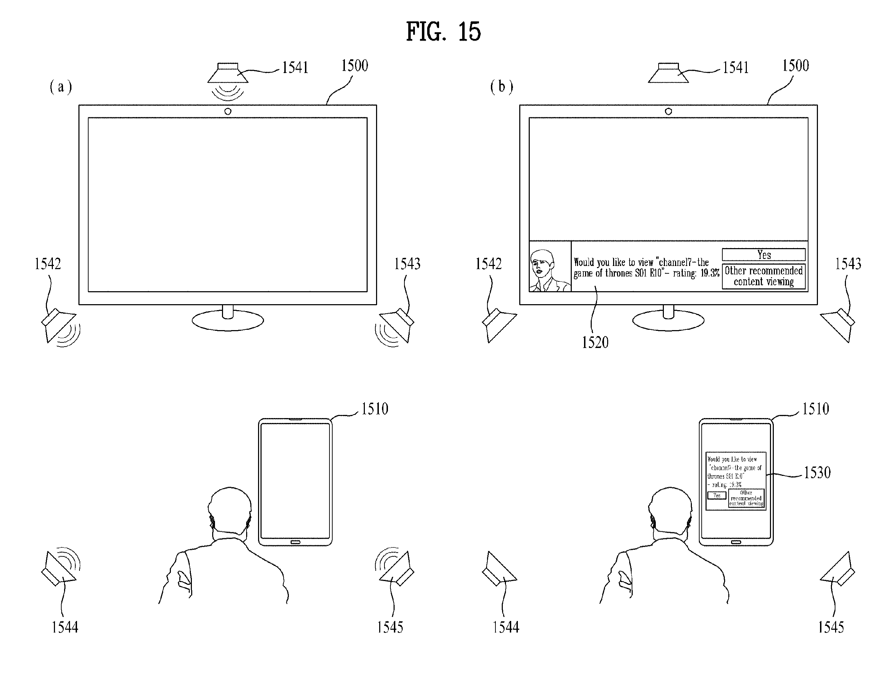

FIG. 15 is a diagram illustrating an example of outputting a notification GUI and controlling a volume of a speaker at a display device according to one embodiment of the present invention.

As shown in FIG. 15, the controller of the display device 1500 according to one embodiment of the present invention may change the volumes of the multi-channel speakers 1541, 1542, 1543, 1544 and 1545 when the first notification GUI 1520 is output on the display device 1500 and the second notification GUI 1530 is output on the external device 1510. For example, as shown in FIG. 15(a), the display device 1500 may output at least one piece of content and the multi-channel speakers 1541, 1542, 1543, 1544 and 1545 may output audio of the at least one piece of content. The controller of the display device 1500 may sense the content immersion reduction event of the user for the at least one piece of content. The controller of the display device 1500 may generate the first notification GUI 1520 including recommended content information based on type of the content immersion reduction event. The controller of the display device 1500 may change the design of the first notification GUI 1520 based on the screen size of the external device 1510 connected to the display device 1500, generate a second notification GUI 1530, and transmit a signal for outputting the generated second notification GUI 1530 to the external device 1510. As shown in FIG. 15(b), the controller of the display device 1500 may reduce the volumes of the multi-channel speakers 1541, 1542, 1543, 1544 and 1545 for outputting audio of the at least one piece of content or set the volumes of the multi-channel speakers 1541, 1542, 1543, 1544 and 1545 to 0. By the design shown in FIG. 15, it is possible to visually and acoustically attract user's attention via the notification GUI and speaker volume control.

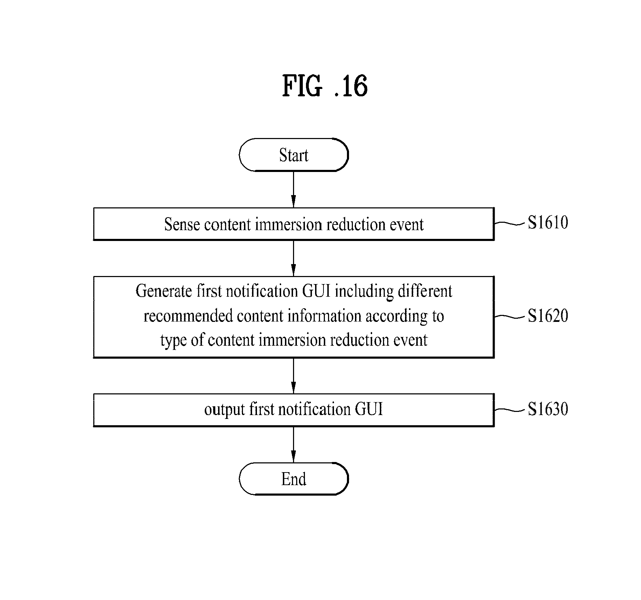

FIG. 16 is a flowchart illustrating a method of controlling a display device according to one embodiment of the present invention. As shown in FIG. 16, the display device according to one embodiment of the present invention may sense a content immersion reduction event (S1610), generate a first notification GUI including different recommended content information according to type of the content immersion reduction event (S1620) and output the first notification GUI on the screen (S1630). Detailed description of the steps is equal to the above description and thus will be omitted herein.

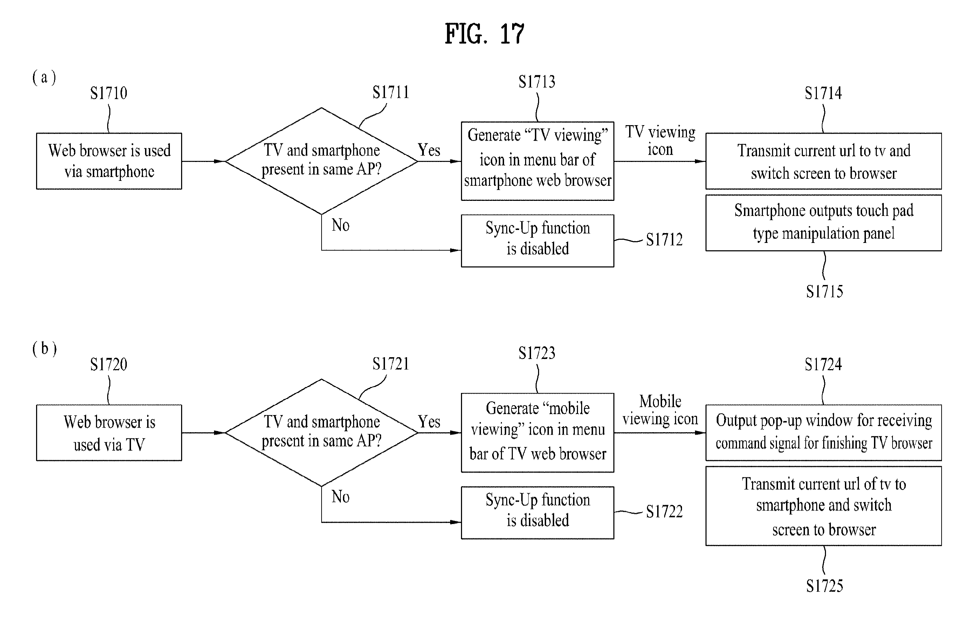

FIGs. 17 to 20 are diagrams illustrating an example of performing a sync-up function between a display device according to one embodiment of the present invention and an external device. Hereinafter, assume that the display device is a TV and the external device is a smartphone. This embodiment is equally applicable to other devices.

As shown in FIG. 17(a), when a web browser is used via the smartphone (S1710), a determination as to whether the smartphone and the TV are in the same access point (AP) is made (S1711) and a sync-up function is not activated if the smartphone and the TV are not in the same AP (S1712). In contrast, when the smartphone and the TV are in the same AP, a "TV viewing" icon may be generated on a web browser menu bar of the smartphone (S1713). The controller of the smartphone may transmit a signal for outputting the web browser on the screen while transmitting uniform resource locator (URL) information of the web browser to the TV, when the "TV viewing" icon is selected (S1714). Further, the controller of the smartphone may output a touch pad type manipulation panel on the smartphone (S1715).

Similarly, as shown in FIG. 17(b), when a web browser is used via the TV (S1720), a determination as to whether the smartphone and the TV are in the same access point (AP) is made (S1721) and a sync-up function is not activated if the smartphone and the TV are not in the same AP (S1722). In contrast, when the smartphone and the TV are in the same AP, a "mobile viewing" icon may be generated on a web browser menu bar of the TV (S1723). The controller of the TV may transmit a signal for outputting the web browser on the screen while transmitting URL information of the web browser to the smartphone, when the "mobile viewing" icon is selected. Further, the controller of the TV may output a pop-up window for receiving a command signal for finishing the web browser output on the TV on the screen (S1724). Further, the controller of the smartphone may execute the web browser on the smartphone and output a web page corresponding to the URL on the screen (S1725).

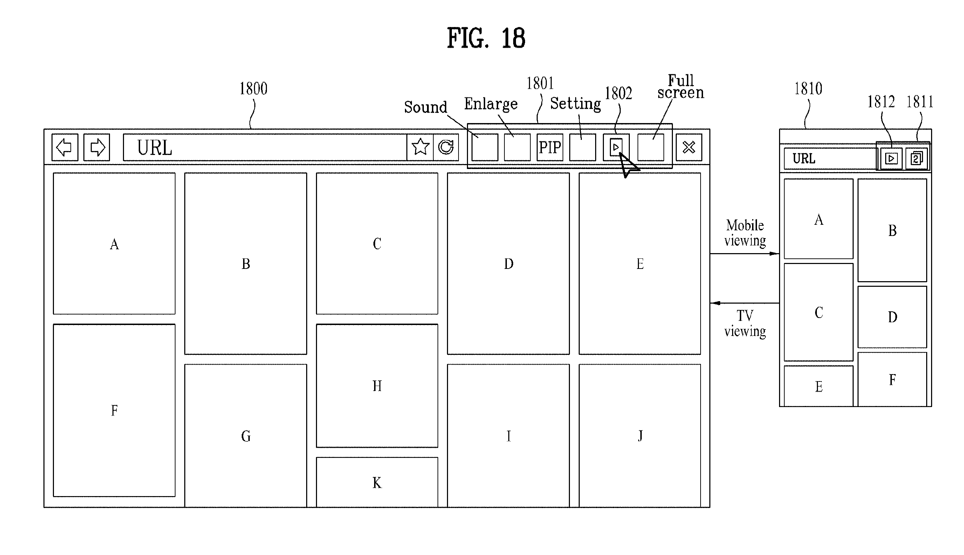

For example, as shown in FIG. 18, when the TV 1800 and the smartphone 1810 are in the same AP and thus the sync-up function is performed, a mobile viewing icon 1802 may be generated in the web browser menu bar 1801 of the TV 1800 and a TV viewing icon 1812 may be generated in the browser menu bar 1811 of the smartphone 1810.

When the TV and the smartphone are present in the same AP, the sync-up function may mean a function for simply and rapidly transmitting content data output on each device to another device present in the same AP and, at the same time, outputting the content data on the screen.

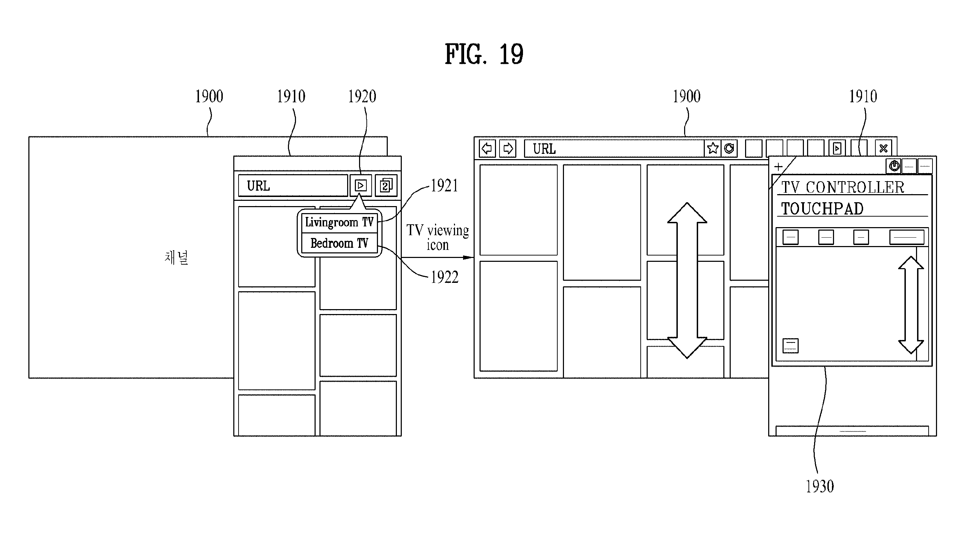

In addition, the sync-up function may be performed among three or more devices. For example, as shown in FIG. 19, if two TVs and one smartphone 1910 are present in the same AP, the controller of the smartphone may output TV lists 1921 and 1922 currently present in the same AP when a signal for selecting a TV viewing icon 1920 of the web browser menu bar is received. The controller of the smartphone may transmit a signal for outputting a web browser on the screen while transmitting URL information of the web browser to the specific TV 1900, when a signal for selecting a specific TV 1900 between the TV lists 1921 and 1922 currently present in the same AP is received. The controller of the smartphone 1910 may output a touch pad type manipulation panel 1930 on the smartphone and control the specific TV 1900 using the manipulation panel 1930.

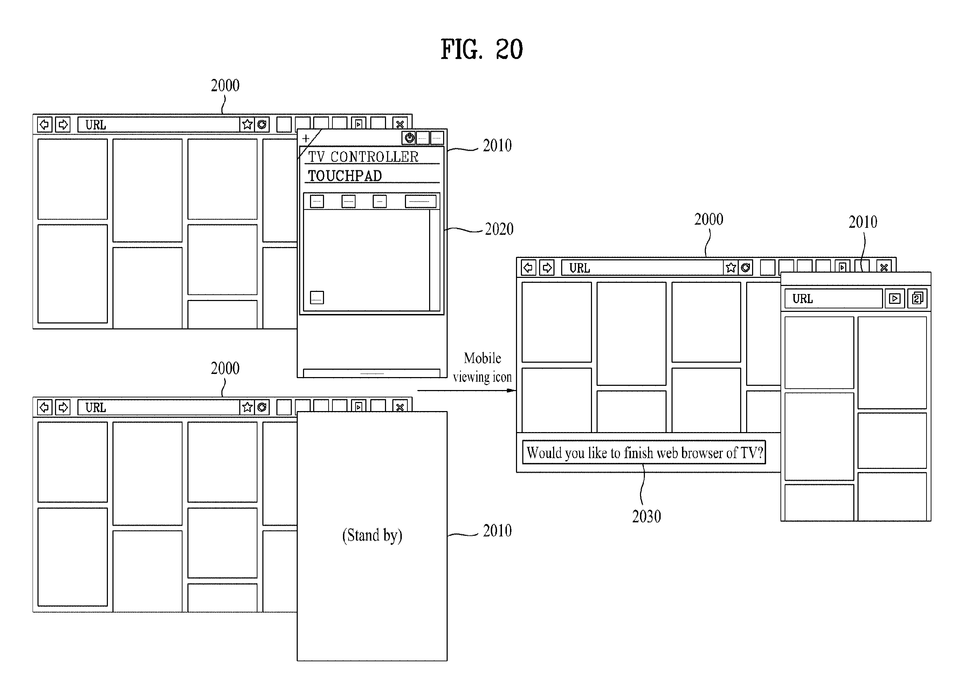

In addition, the sync-up function may be performed even in a stand-by device. For example, as shown in FIG. 20, a TV 2000 and a smartphone 2010 may be present in the same AP. The smartphone 2010 may control the TV 2000 using the touch pad type manipulation panel 2020, the smartphone 1020 is in a standby state, and the TV 2000 may be controlled by a remote controller. At this time, when a signal for selecting a mobile viewing icon in a web browser menu bar of the TV 2000 is sensed, the controller of the TV 2000 may transmit, to the smartphone 2010, a signal for the same web page on the smartphone 2010. The controller of the TV 2000 may output a pop-up window for receiving a command signal for finishing the web browser output on the TV 2000 on the screen. At this time, when the user inputs a command for finishing the web browser, the controller of the TV 2000 may finish the web browser.

According to one embodiment of the present invention, it is possible to provide content in which a user may have more interest than content currently output on a screen, by sensing various content immersion reduction events and outputting a notification including recommended content information on a screen of a display device.

According to another embodiment of the present invention, it is possible to enable a user to receive a recommended content service even when the user uses an external device, by sensing various content immersion reduction events and transmitting notification data including recommended content information to the external device connected to a display device.

According to another embodiment of the present invention, it is possible to maximize the effect of attracting user's attention by changing the volume of a speaker when a notification is output on a screen after Wi-Fi Direct is automatically connected.

Although the embodiments of the present invention are described with respect to respective drawings for convenience of description, the embodiments shown in the respective drawings may be combined into new embodiments. The display device and the method for controlling the same according to one embodiment are not limited to the configurations and methods of the above-described embodiments. That is, the above-described embodiments may be partially or wholly combined to make various modifications.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

Both apparatus and method inventions are mentioned in this specification and descriptions of both of the apparatus and method inventions may be complementarily applicable to each other.

## Claims

1. A method for controlling a display device, the method comprising:
sensing a content immersion reduction event;
generating a first notification graphical user interface, GUI, including different recommended content information according to type of the content immersion reduction event; and
outputting the first notification GUI,
wherein the type of the content immersion reduction event includes a first type based on key input signal information received from an external input device connected to the display device and a second type based on an event occurring in an external device connected to the display device, and
wherein the content immersion reduction event includes an event for changing a channel by a predetermined number or more.

2. The method according to claim 1, further comprising:
detecting a screen size of the external device connected to the display device;
generating a second notification GUI obtained by changing design of the first notification GUI in correspondence with the detected screen size of the external device; and
transmitting data of the second notification GUI to the external device.

3. The method according to claim 1, wherein the content immersion reduction event includes an event for sensing a signal for controlling the external device for a predetermined time or more.

4. The method according to claim 1, wherein the recommended content information included in the first notification GUI is channel information of a program currently having a highest rating when the type of the content immersion reduction event is the first type.

5. The method according to claim 1, wherein the recommended content information included in the first notification GUI is content information associated with content output on the external device when the type of the content immersion reduction event is the second type.

6. The method according to claim 2, wherein:
the second notification GUI is output on the external device, and
the first notification GUI and the second notification GUI include the same recommended content information.

7. The method according to claim 2, wherein:
the second notification GUI is output on the external device, and
the first notification GUI and the second notification GUI are simultaneously output.

8. The method according to claim 7, wherein a speaker volume of the display device is changed when the first notification GUI and the second notification GUI are simultaneously output.

9. A display device comprising:
a receiving module configured to receive a key input signal from an external input device;
a communication module configured to perform data communication with an external device;
a user interface module configured to receive a command from a user;
a display module configured to output content on a screen; and
a controller configured to control operation of the display device,
wherein the controller is further configured to sense a content immersion reduction event, generate a first notification graphical user interface, GUI, including different recommended content information according to type of the content immersion reduction event, and output the first notification GUI on a screen,
wherein the type of the content immersion reduction event includes a first type based on key input signal information received from an external input device connected to the display device and a second type based on an event occurring in an external device connected to the display device, and
wherein the content immersion reduction event includes an event for changing a channel by a predetermined number or more.

10. The display device according to claim 9, wherein the controller is further configured to detect a screen size of the external device connected to the display device, generate a second notification GUI obtained by changing the design of the first notification GUI in correspondence with the detected screen size of the external device, and transmit data of the second notification GUI to the external device.

11. The display device according to claim 9, wherein the content immersion reduction event includes an event for sensing a signal for controlling the external device for a predetermined time or more.

12. The display device according to claim 9, wherein the recommended content information included in the first notification GUI is channel information of a program currently having a highest rating when the type of the content immersion reduction event is the first type.

13. The display device according to claim 9, wherein the recommended content information included in the first notification GUI is content information associated with content output on the external device when the type of the content immersion reduction event is the second type.

14. The display device according to claim 10, wherein:
the second notification GUI is output on the external device, and
the first notification GUI and the second notification GUI include the same recommended content information.

15. The display device according to claim 10, wherein:
the second notification GUI is output on the external device, and
the first notification GUI and the second notification GUI are simultaneously output.
